# NOUVEAU FASCICULE DE BREVET EUROPEEN

(11) **EP 2 076 119 B2**
(45) Date de publication et mention de la décision concernant l'opposition: **27.04.2022**
(45) Mention de la délivrance du brevet: 17.02.2010
(21) Numéro de dépôt: 07821178.6
(22) Date de dépôt: 11.10.2007
(51) Int. Cl.: A01N 25/02

(54) **COMPOSITION SOLVANTE COMPRENANT AU MOINS TROIS SOLVANTS, ET FORMULATION PHYTOSANITAIRE COMPRENANT LADITE COMPOSITION SOLVANTE AINSI QU' UN COMPOSE ACTIF**
LÖSUNGSMITTELZUSAMMENSETZUNG ENTHALTEND MINDESTENS DREI LÖSUNGSMITTEL, UND PFLANZENSCHUTZFORMULIERUNG, DIE DIESE ZUSAMMENSETZUNG UND EINEN WIRKSTOFF ENTHÄLT
SOLVENT COMPOSITION CONTAINING AT LEAST THREE SOLVENTS, AND PHYTOSANITARY FORMULATION CONTAINING SAID COMPOSITION AND AN ACTIVE INGREDIENT

(30) Priorité: 13.10.2006 FR 0609000; 06.03.2007 FR 0701620
(43) Date de publication de la demande: 08.07.2009
(73) Titulaire: RHODIA OPERATIONS, 93300 Aubervilliers (FR)
(72) Inventeur: BRAMATI, Valério, I-20020 Arese (IT); LOURENCO, Wagner, 13083-130 Campinas (BR)
(74) Mandataire: Cardon, Flavie
(86) Numéro de dépôt international: PCT/EP2007/060811
(87) Numéro de publication internationale: WO 2008/043807

(56) Documents cités:
- WO-A-2005/087002
- WO-A1-2007/030887
- WO-A2-2007/110355
- DD-A1- 242 554
- DD-A1- 242 555
- DD-A5- 298 473
- DE-A1- 4 140 928
- DATABASE CA [Online] CHEMICAL ABSTRACTS SERVICE, COLUMBUS, OHIO, US; SLAVASHEVICH, M. A. ET AL: "Tebuconazole-based fungicidal composition" XP002433505 extrait de STN Database accession no. 2004:899461 & RU 2 238 649 C1 (ZAKRYTOE AKTSIONERNOE OBSHCHESTVO "SHCHELKOVO AGROKHIM", RUSSIA) 27 octobre 2004 (2004-10-27)

## Description

La présente invention a pour objet une formulation phytosanitaire concentrée comprenant un composé actif. Elle est stable, et présente une facilité d'utilisation pour l'exploitant agricole. La présente invention a également pour objet une composition solvante, utile et préférée notamment pour la mise en œuvre de la formulation phytosanitaire.

L'agriculture utilise de nombreuses matières actives telles que des fertilisants ou des pesticides, par exemple des insecticides, herbicides ou fongicides. On parle de produits phytosanitaires actifs (ou de matière active). Les produits phytosanitaires actifs sont généralement produits sous forme pure ou très concentrée. Ils doivent être utilisés sur les exploitations agricoles à de faibles concentrations. A cette fin, ils sont généralement formulés avec d'autres ingrédients afin de permettre une dilution en poids aisée par l'exploitant agricole. On parle de formulations phytosanitaires. La dilution opérée par l'exploitant agricole est généralement réalisée par mélange de la formulation phytosanitaire avec de l'eau.

Ainsi les formulations phytosanitaires doivent permettent une dilution en poids aisée par l'exploitant agricole, afin d'obtenir un produit dans lequel le produit phytosanitaire est correctement dispersé, par exemple sous forme de solution, d'émulsion, de suspension, ou de suspo-émulsion. Les formulations phytosanitaires permettent ainsi le transport d'un produit phytosanitaire sous forme relativement concentrée, un conditionnement aisé et/ou une manipulation aisée pour l'utilisateur final. Différents types de formulations phytosanitaires peuvent être utilisés selon les différents produits phytosanitaires. On cite par exemple les concentrés émulsionnables (Emulsifiable Concentrates «EC»), les émulsions concentrées (Emulsion in water "EW"), les microémulsions ("ME"), les poudres mouillables (Wettable Powders «WP»), les granulés dispersables dans l'eau (Water Dispersible Granules, «WDG»). Les formulations qu'il est possible d'utiliser dépendent de la forme physique du produit phytosanitaire (par exemple solide ou liquide), et de ses propriétés physico-chimiques en présence d'autres composés comme l'eau ou les solvants.

Après dilution en poids par l'exploitant agricole, par exemple par mélange avec de l'eau, le produit phytosanitaire peut se trouver sous différentes formes physiques: solution, dispersion de particules solides, dispersion de gouttelettes du produit, gouttelettes de solvant dans lequel le produit est dissous... Les formulations phytosanitaires comprennent généralement des composés permettant d'obtenir ces formes physiques. Il peut par exemple s'agir de tensioactifs, de solvants, de supports minéraux, et/ou de dispersants. Bien souvent ces composés n'ont pas un caractère actif, mais un caractère d'intermédiaire d'aide à la formulation. On souhaite donc bien souvent en limiter la quantité afin de limiter les coûts et/ou une éventuelle nocivité pour l'environnement. Les formulations phytosanitaires peuvent notamment être sous forme liquide, ou sous forme solide.

Pour des raisons pratiques (par exemple pour des raisons de facilité de manipulation et/ou de transport), on peut préférer parfois utiliser des formulations phytosanitaires sous forme solide, et parfois utiliser des formulations sous forme liquide.

Afin de préparer des formulations phytosanitaires de produits phytosanitaires actifs solides, il est connu de solubiliser le produit dans un solvant. La formulation phytosanitaire comprend ainsi une solution du produit dans le solvant. La formulation peut être sous forme solide, par exemple sous forme de poudre mouillable (WP) où la solution imbibe un support inorganique, par exemple du kaolin et/ou de la silice. La formulation peut alternativement être sous forme liquide, par exemple sous forme de concentré émulsionnable (EC) présentant une seule phase liquide limpide comprenant le solvant et le produit en solution, pouvant former une émulsion par ajout d'eau, sans agitation ou avec une faible agitation. Elle peut aussi être ou sous forme d'une émulsion concentrée (EW), trouble, dont la phase dispersée dans l'eau comprend le solvant et le produit en solution dans le solvant. Elle peut aussi être forme d'une microémulsion (ME), limpide, dont la phase dispersée dans l'eau comprend le solvant et le produit en solution dans le solvant.

Certains actifs phytosanitaires solides sont souvent difficiles à formuler. Par exemple le tebuconazole est un fongicide particulièrement efficace, et d'utilisation répandue, pour la culture du soja notamment. Pour certains actifs phytosanitaires, il est difficile de réaliser des formulations concentrées, faciles à diluer pour l'exploitant agricole, stables, et sans inconvénients (avérés ou perçus) substantiels en matière de sécurité, de toxicité et/ou d'eco-toxicité. Pour certains actifs, il est difficile de formuler à des concentrations relativement élevées, avec une stabilité suffisante. En particulier il est nécessaire d'éviter l'apparition de cristaux en particulier à basse température et/ou lors de la dilution et/ou lors du stockage à température élevée de la composition diluée. Les cristaux peuvent avoir des effets négatifs, notamment boucher les filtres des dispositifs utiliser pour répandre la composition diluée, boucher les dispositifs de pulvérisation, diminuer l'activité globale de la formulation, créer des problèmes inutiles de filières de déchets pour éliminer les cristaux, et/ou provoquer une mauvaise répartition du produit actif sur le champ agricole.

L'utilisation de systèmes solvants à base d'un unique solvant comme la N-méthylpyrrolidone (NMP) est connue. Ce solvant permet de solubiliser un grand nombre d'actifs, et d'éviter la formation de cristaux, mais il est toutefois considéré comme présentant des dangers, notamment pour les opérateurs et les utilisateurs le manipulant. Il existe un besoin pour des systèmes solvants alternatifs, présentant notamment:
- une grande modularité, c'est-à-dire une faculté à être utilisé pour un grand nombre d'actifs,
- une solubilisation de quantités importantes d'actifs,
- une absence de cristallisation, même des conditions exigeantes, et/ou
- un profile de sécurité, toxicologie et/ou eco-toxicologie perçu comme favorable.

L'invention a pour objet de répondre à ce besoin, et d'éviter au moins un des inconvénients mentionnés ci-dessus. A cet effet, l'invention propose une formulation phytosanitaire concentrée comprenant:
a) un produit phytosanitaire actif,
b) un système solvant comprenant les trois solvants suivants:
   b1) de 20 à 70% en poids d'un acétate d'alkyle dont le groupe alkyle est un alkyle en C₆-C₁₂,
   b2) de 20 à 70% en poids d'un sulfoxyde, et
   b3) de 10 à 60% en poids d'acétophénone,
   ces quantités étant exprimées par rapport à la somme des solvants b1), b2) et b3), égale à 100%,
c) éventuellement au moins agent émulsifiant, de préférence un tensioactif, et
d) éventuellement de l'eau.

Il s'agit d'une formulation phytosanitaire concentrée. L'invention concerne également l'utilisation de la formulation (ou une méthode) pour préparer une composition diluée dans l'eau du produit phytosanitaire actif, par mélange d'au moins une part en poids de formulation concentrée avec au moins 10 parts d'eau, de préférence moins de 1000 parts. La composition diluée peut bien entendu comprendre d'autres produits phytosanitaires actifs, pouvant provenir d'autres formulations phytosanitaires, ainsi combinés dans la composition.

L'invention concerne également l'utilisation du système solvant dans des formulations concentrées ou dans les compositions diluées.

L'invention concerne également une composition solvante particulièrement efficace et particulièrement utile pour la mise en œuvre de la formulation phytosanitaire, et pouvant être également utilisée à d'autres fins. La composition solvante comprend un mélange de solvants. Elle comprend:
- de 20 à 70 %, de préférence de 30 à 50%, en poids d'un solvant b1) acétate d'alkyle dont le groupe alkyle comprend au moins 3 atomes de carbone
- de 20 à 70 %, de préférence de 25 à 45%, en poids d'un solvant b2) sulfoxyde
- de 10 à 60 %, de préférence de 15 à 35%, en poids d'un solvant b3) cétone.

### Définitions

Dans la présente demande, on entend par "formulation phytosanitaire concentrée" une formulation destinée à être mélangée avec de l'eau (par exemple diluée) par l'utilisateur, par opposition à une composition phytosanitaire diluée.

Dans la présente demande, lorsque sont utilisées des plages de concentrations ou des proportions en % dans une composition ou une formulation, le total avec éventuellement d'autres ingrédients est de 100%. Sauf mention contraire il s'agit de concentration ou de proportion en poids de matière active ou de matière sèche.

Dans la présente demande, lorsque sont utilisées des plages de concentrations ou des proportions en g/L dans une composition ou une formulation, le total, avec éventuellement d'autres ingrédients est tel qu'il est conforme à la densité de la composition ou de la formulation (pour 1 L, le total est égal à la densité * 1000).

Dans la présente demande on entend par produit phytosanitaire solide un produit ayant un point de fusion supérieur à 25°C.

### Produit phytosanitaire actif a)

Des produits phytosanitaires actifs, notamment des produits non solubles dans l'eau et solides sont connus de l'homme du métier. Le produit phytosanitaire actif peut notamment être un herbicide, un insecticide, un acaricide, un fongicide, ou un agent d'élimination des rongeurs ("rodenticide" en anglais) par exemple un raticide.

A titre d'exemples non limitatifs de matières actives convenables, on peut citer entre autres l'Amétryne, le Diuron, le Linuron, le Chlortoluron, l'Isoproturon, le Nicosulfuron, le Metamitron, le Diazinon, l'Aclonifen, l'Atrazine, le Chlorothalonil, le Bromoxynil, le Bromoxynil heptanoate, le Bromoxynil octanoate, le Mancozeb, la Manèbe, le Zineb, la Phenmédipham, le Propanyl, la série des phénoxyphénoxy, la série des hétéroaryloxyphénoxy, le CMPP, le MCPA, le 2,4-D, la Simazine, les produits actifs de la série des imidazolinones, la famille des organophosphorés, avec notamment l'Azinphos-éthyl, l'Azinphos-méthyl, l'Alachlore, le Chlorpyriphos, le Diclofop-méthyl, le Fénoxaprop-p-éthyl, le Méthoxychlore, la Cyperméthrine, le Fenoxycarbe, le cymoxanil, le chlorothalonyl, Ikes insecticides neonicotinoides, la famille des fongicide triazoles tels que l'azaconazole, bromuconazole, cyproconazole, difenoconazole, diniconazole, epoxyconazole, fenbuconazole, flusilazole, myclobutanyl, tebuconazole, triadimefon, triadimenol, des strobilurines telles que la pyraclostrobine, la picoxystrobine, l'azoxystrobine, la famoxadone, le kresoxym-methyl et la trifloxystrobine, les solfonylurées telles que le bensulfuron-methyl, le chlorimuron-ethyl, le chlorsulfuron, le metsulfuron-methyl, le nicosulfuron, le sulfomethuron-methyl, le triasulfuron, le tribenuron-methyl.

On choisi parmi cette liste les produits non-hydrosolubles.

Le produit phytosanitaire actif peut en particulier être choisi parmi les azoles, de préférence les triazoles, de préférence le tebuconazole. Le tebuconazole est la dénomination usuelle d'un composé connu de l'homme du métier, dont la formule est la suivante:

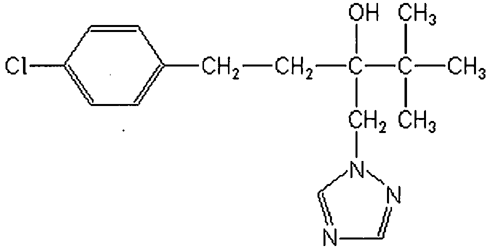

Le tebuconazle est un produit phytosanitaire solide.

A titre de triazoles différents du tebuconazole, on peut notamment citer les composés suivants: Azaconazole; bitertanol; bromuconazole; cyproconazole; diclobutrazol; difenoconazole; diniconazole; diniconazole-M; epoxiconazole; etaconazole; fenbuconazole; fluotrimazole; fluquinconazole; flusilazole; flutriafol; furconazole; furconazole-cis; hexaconazole; imibenconazole; ipconazole; metconazole; myclobutanil; penconazole; prochloraz, propiconazole; prothioconazole; quinconazole; strobulurin et analogues, simeconazole; tetraconazole; triadimefon; triadimenol; triazbutil; triflumizole, triticonazole; uniconazole; uniconazole-P.

Le produit phytosanitaire actif peut en particulier être choisi parmi les dinitroanilines, comme le pendimethalin ou le trifluralin.

L'invention peut être mise en œuvre de manière particulièrement avantageuse pour les produits phytosanitaires actifs suivants:

| | |
|---|---|
| Alachlor | 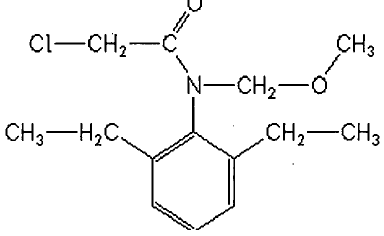 |
| Chlorpyrifos | 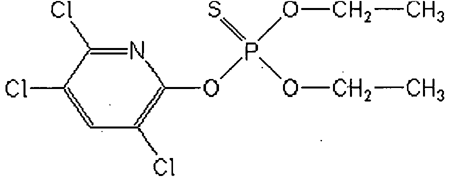 |
| alpha-cyperméthrine | 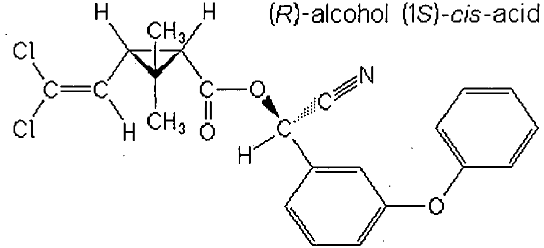 |
| | 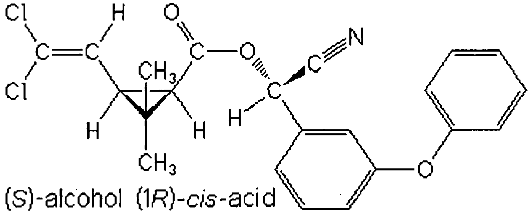 |
| | En mélange racémique et/ou en stéréoisomères isolés. |
| Phenmedipham | 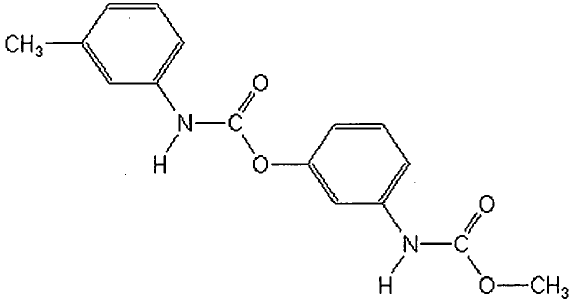 |
| Propanil | 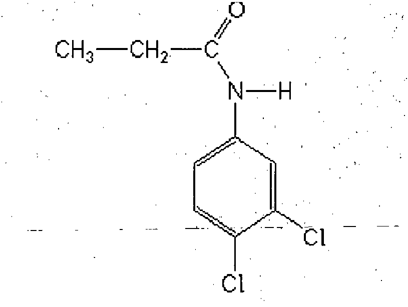 |
| Pendimethalin | 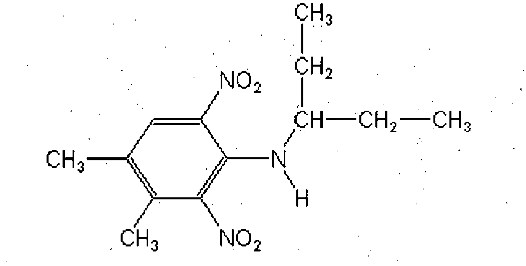 |
| triadimenol | 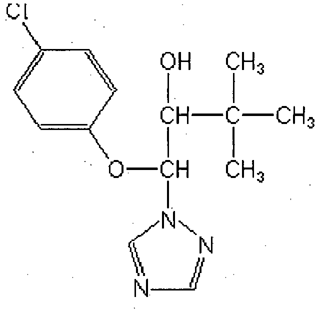 |
| Trifluralin | 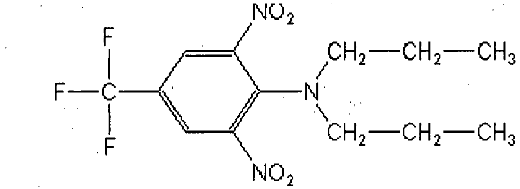 |
| Oxyfluorfen | 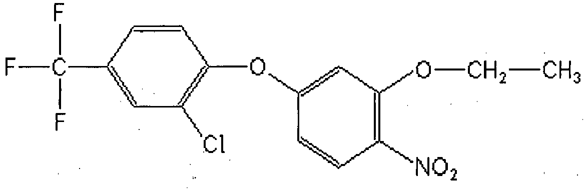 |
| Dimethoate | 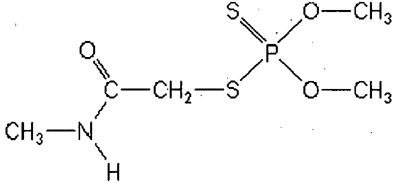 |
| Imidacloprid | 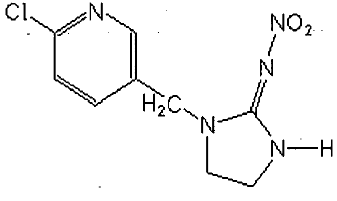 |
| Proxopur | 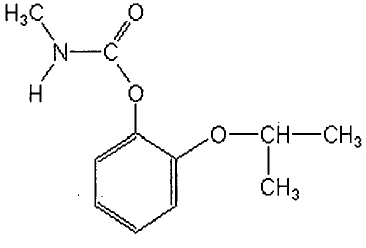 |
| Benomyl | 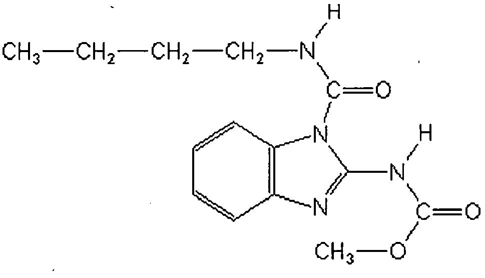 |
| Deltamethrine | 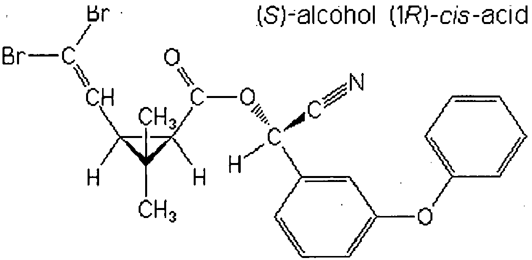 |
| Fenvalerate | 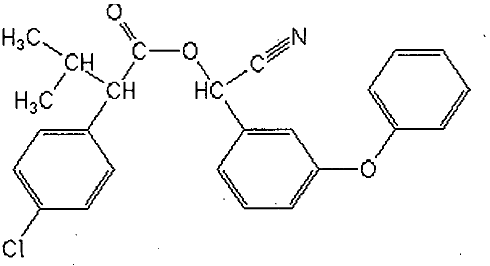 |
| Abamectin | 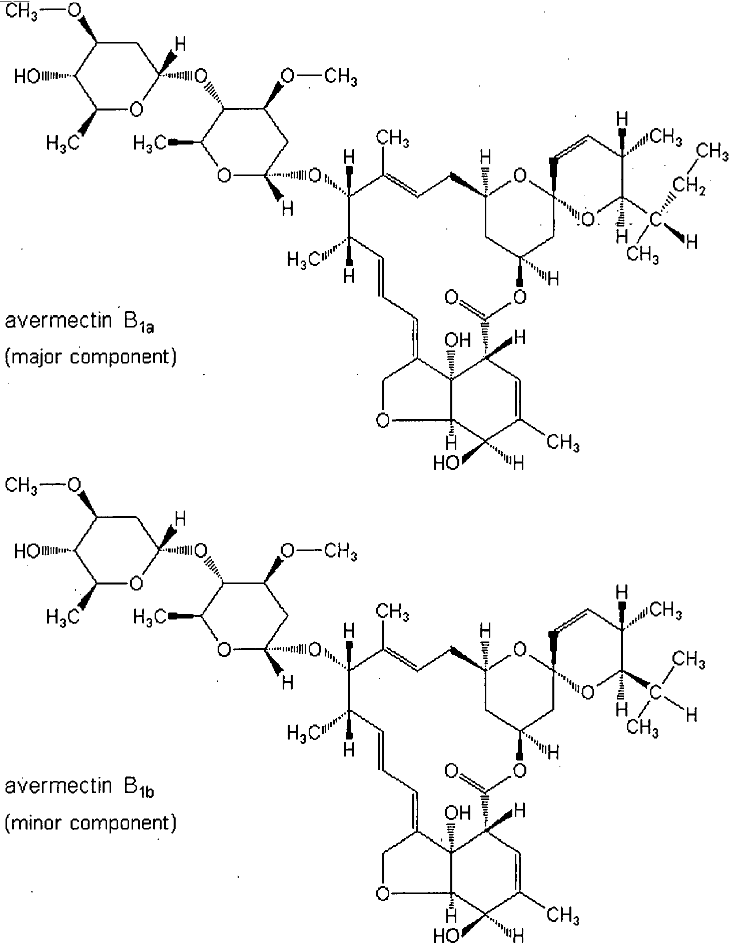 |
| Amicarbazone | 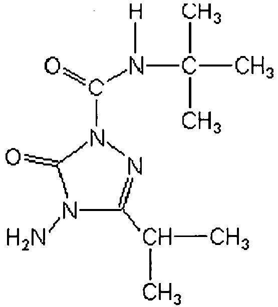 |
| Bifenthrin | 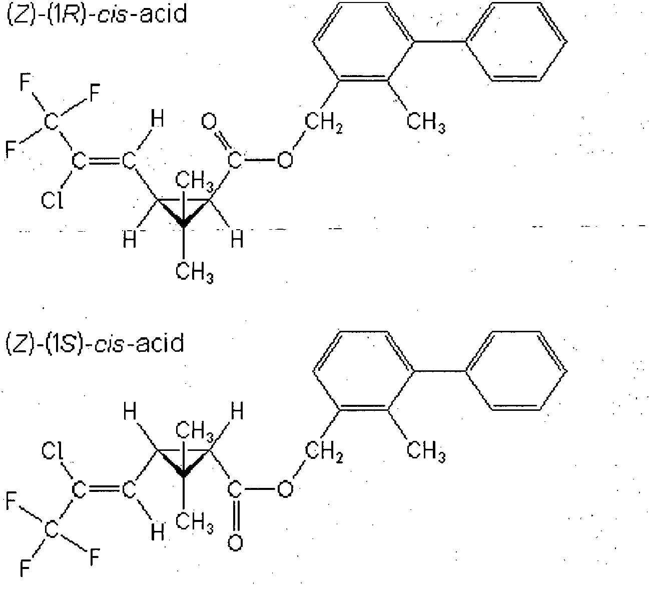 |
| Carbosulfan | 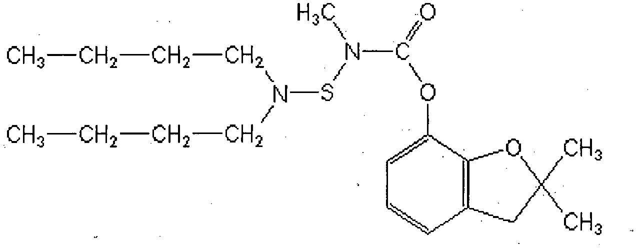 |
| Cyfluthrin | 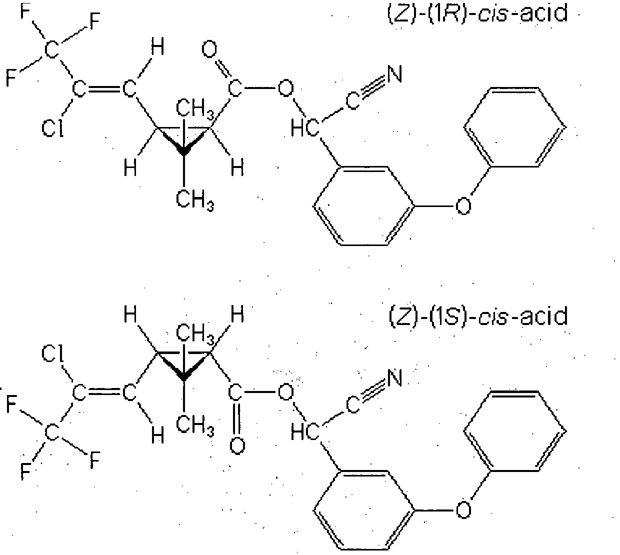 |
| Difenconazole | 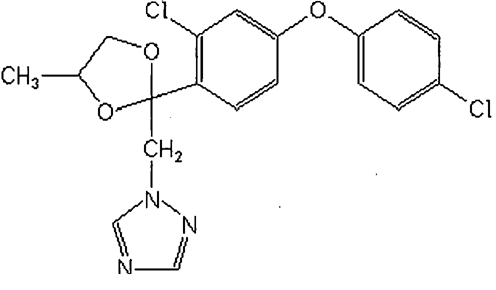 |
| Ethofenprox | 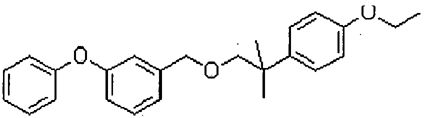 |
| Fenoxaprop-ethyl | 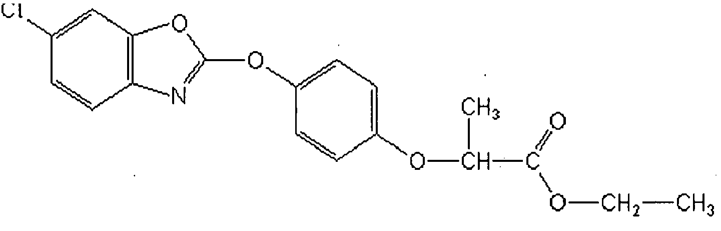 |
| Fipronil | 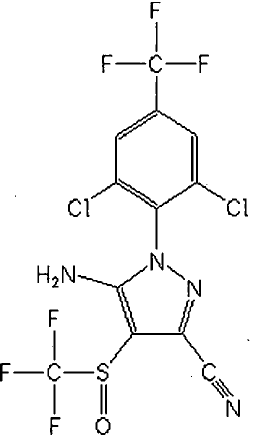 |
| Fenvalerate | 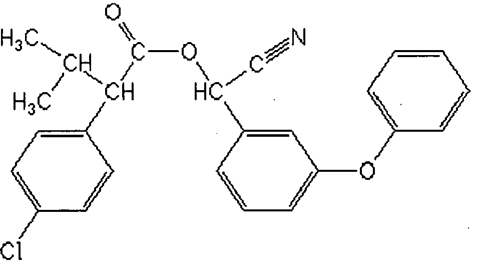 |
| Fluazifop-p-butyl | 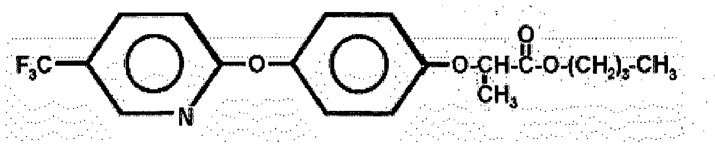 |
| Flufenouron | 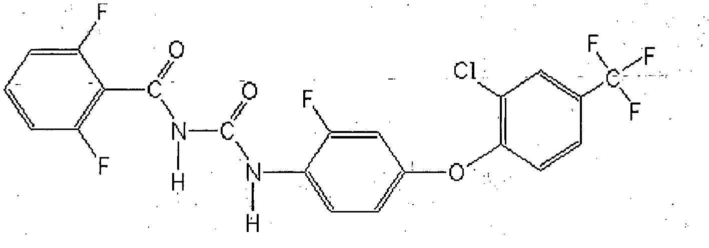 |
| Hexazinone | 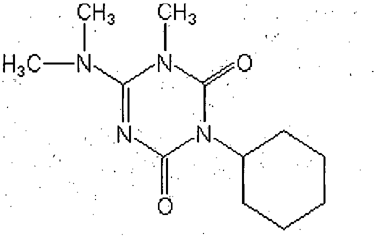 |
| Lambda-cyalothrin | 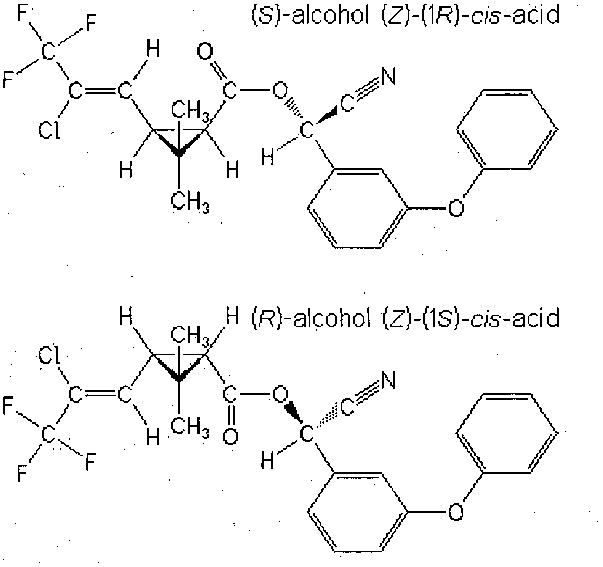 |
| Methomyl | 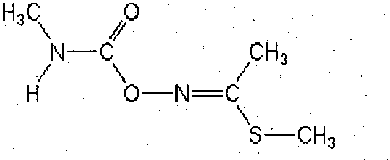 |
| Permethrin | 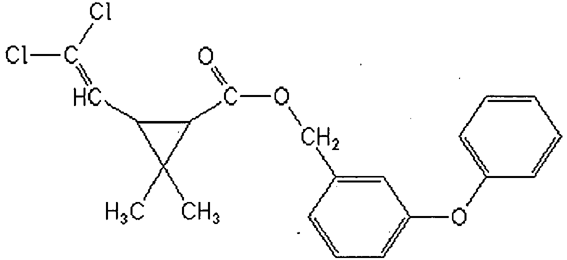 |
| Prochloraz | 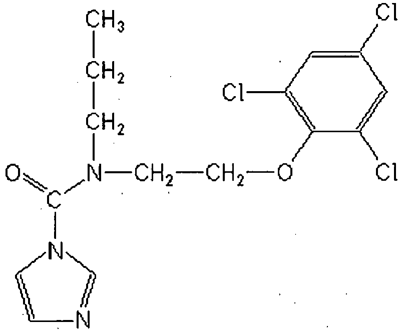 |
| Propiconazole | 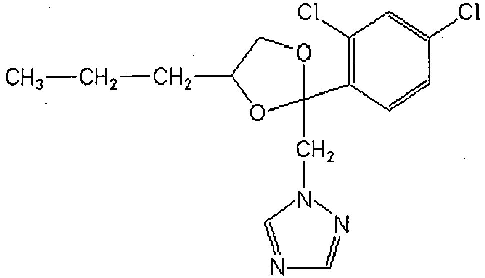 |
| Tebuconazole | 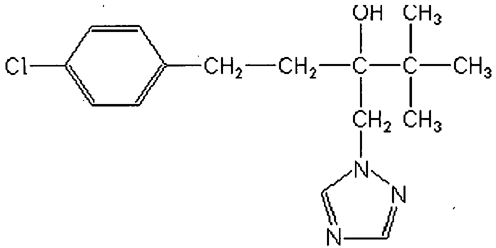 |

Ces produits et dénominations sont connus de l'homme du métier. On ne sortirait pas du cadre de l'invention en associant plusieurs produits phytosanitaires actifs.

### Solvant b) et mélange de solvants et composition solvante

Le système solvant b) comprend plusieurs solvants. Le système solvant peut être introduit sous forme d'une composition solvante préparée au préalable. Il peut aussi s'agir d'une association de solvants introduits individuellement, ou sous forme de pré-mélanges partiels, dans la formulation.

Par système solvant dans la formulation phytosanitaire (ou dans la composition diluée) on entend aussi bien un mélange opéré préalablement à l'introduction dans la formulation, qu'une association, où on mélange les solvants en réalisant la formulation, lors de la mise en présence avec le produit actif phytosanitaire.

L'invention concerne également une composition solvante, particulièrement utile comprenant un système solvant. Dans la composition solvante, le mélange de solvant est entendu comme un mélange effectif (par opposition à une association), de préférence limpide.

Le système solvant comprend les trois solvants suivants:
b1) un acétate d'alkyle dont le groupe alkyle est un alkyle en C₆-C₁₂,
b2) un sulfoxyde
b3) l'acétophénone.

L'alkyle du solvant b1) est avantageusement choisi parmi le cyclohexyle ou l'hexyle (n-hexyle), l'éthylhexyle, notamment le 2-éthylhexyle, l'octyle (n-ocyle), l'isooctyle, le décyle (n-decyle), l'isodécyle.

Le sulfoxyde b2) est avantageusement le DiMéthylSulfOxyde (DMSO). Le Méthylsulfoxyde est une alternative pouvant être envisagée.

La cétone b3) est l'acétophénone.

Selon un mode préférentiel, on utilise le système solvant (ou la composition solvante) comprend les solvants suivants:
b1) Acétate de cyclohexyle
b2) DiMéthylSulfOxyde (DMSO)
b3) Acétophénone

Ce système solvant peut être mis en œuvre par introduction des différents solvants de manière séparée. Il peut être mis en œuvre sous forme d'une composition solvante.

Le système solvant (ou la composition solvante) comprend:
- de 20 à 70 %, de préférence de 30 à 50%, en poids du solvant b1)
- de 20 à 70 %, de préférence de 25 à 45%, en poids du solvant b2)
- de 10 à 60 %, de préférence de 15 à 35%, en poids du solvant b3),
ces quantités étant exprimées par rapport à la somme des solvants b1), b2) et b3), égale à 100%.

Par exemple le système solvant (ou la composition solvante) est un système dit "système solvant préféré" comprenant:
- de 30 à 50% en poids d'acétate de cyclohexyle ou d'éthylhexyle
- de 25 à 45% en poids de diméthylesulfoxyde
- de 15 à 35% en poids d'acétophénone.

De préférence la quantité en poids du solvant b3), en particulier d'acétophénone, par rapport à la somme des solvants b1), b2) et b3), égale à 100%, est inférieure à 25%, par exemple comprise entre 10 et 25%, de préférence en 15 et 25%.

On précise qu'en général la composition solvante ne comprend substantiellement pas d'eau (typiquement moins de 5% en poids, de préférence moins de 1% en poids), qu'elle ne comprend substantiellement pas de produit phytosanitaire actif (typiquement moins de 5% en poids, de préférence moins de 1% en poids). Il n'est pas exclu qu'elle comprennent d'autres solvants (différents de l'eau) et/ou au moins un tensioactif.

### Agent émulsifiant c)

La formulation phytosanitaire peut comprendre un agent émulsifiant, typiquement et de préférence un tensioactif. Les agents émulsifiants sont des agents destinés à faciliter la mise en émulsion ou la dispersion après mise en présence de la formulation avec de l'eau, et/ou à stabiliser (dans le temps et/ou en température) l'émulsion ou la dispersion, par exemple en évitant une sédimentation.

Les tensioactifs sont des composés connus, qui présentent une masse molaire généralement relativement faible, par exemple inférieure à 1000 g/mol. Le tensioactif peut être un tensioactif anionique sous forme salifiée ou acide, non ionique de préférence polyalcoxylé, cationique, amphotère (terme incluant aussi les tensioactifs zwitterioniques). Il peut s'agir d'un mélange ou d'une association de ces tensioactifs.

A titre d'exemples de tensioactifs anioniques, on peut citer, sans intention de s'y limiter:
- les acides alkylsulfoniques, les acides arylsulfoniques, éventuellement substitués par un ou plusieurs groupements hydrocarbonés, et dont la fonction acide est partiellement ou totalement salifiée, comme les acides alkylsulfoniques en C₈-C₅₀, plus particulièrement en C₈-C₃₀, de préférence en C₁₀-C₂₂, les acides benzènesulfoniques, les acides naphtalènesulfoniques, substitués par un à trois groupements alkyles en C₁-C₃₀, de préférence en C₄-C₁₆, et/ou alcényles en C₂-C₃₀, de préférence en C₄-C₁₆.
- les mono- ou diesters d'acides alkylsulfosucciniques, dont la partie alkyle, linéaire ou ramifiée, éventuellement substituée par un ou plusieurs groupements hydroxylés et/ou alcoxylés, linéaires ou ramifiés en C₂-C₄ (de préférence éthoxylés, propoxylés, éthopropoxylés).
- les esters phosphates choisis plus particulièrement parmi ceux comprenant au moins un groupement hydrocarboné saturé, insaturé ou aromatique, linéaire ou ramifié, comprenant 8 à 40 atomes de carbone, de préférence 10 à 30, éventuellement substitués par au moins un groupement alcoxylé (éthoxylé, propoxylé, éthopropoxylé). En outre, ils comprennent au moins un groupe ester phosphate, mono- ou diestérifié de telle sorte que l'on puisse avoir un ou deux groupes acides libres ou partiellement ou totalement salifiés. Les esters phosphates préférés sont du type des mono- et diesters de l'acide phosphorique et de mono-, di- ou tristyrylphénol alcoxylé (éthoxylé et/ou propoxylé), ou de mono-, di- ou trialkylphénol alcoxylé (éthoxylé et/ou propoxylé), éventuellement substitué par un à quatre groupements alkyles ; de l'acide phosphorique et d'un alcool en C₈-C₃₀, de préférence en C₁₀-C₂₂ alcoxylé (éthoxylé ou éthopropoxylé); de l'acide phosphorique et d'un alcool en C₈-C₂₂, de préférence en C₁₀-C₂₂, non alcoxylé.
- les esters sulfates obtenus à partir d'alcools saturés, ou aromatiques, éventuellement substitués par un ou plusieurs groupements alcoxylés (éthoxylés, propoxylés, éthopropoxylés), et pour lesquels les fonctions sulfates se présentent sous la forme acide libre, ou partiellement ou totalement neutralisées. A titre d'exemple, on peut citer les esters sulfates obtenus plus particulièrement à partir d'alcools en C₈-C₂₀, saturés ou insaturés, pouvant comprendre 1 à 8 motifs alcoxylés (éthoxylés, propoxylés, éthopropoxylés) ; les esters sulfates obtenus à partir de phénol polyalcoxylé, substitués par 1 à 3 groupements hydroxycarbonés en C₂-C₃₀, saturés ou insaturés, et dans lesquels le nombre de motifs alcoxylés est compris entre 2 et 40 ; les esters sulfates obtenus à partir de mono-, di- ou tristyrylphénol polyalcoxylés dans lesquels le nombre de motifs alcoxylés varie de 2 à 40.

Les tensioactifs anioniques peuvent être sous forme acide (il sont potentiellement anioniques), ou sous une forme partiellement ou totalement salifiée, avec un contre-ion. Le contre-ion peut être un métal alcalin, tel que le sodium ou le potassium, un alcalino-terreux, tel que le calcium, ou encore un ion ammonium de formule N(R)₄⁺ dans laquelle R, identiques ou différents, représentent un atome d'hydrogène ou un radical alkyle en C₁-C₄ éventuellement substitué par un atome d'oxygène.

A titres d'exemples de tensioactifs non ioniques, on peut citer, sans intention de s'y limiter:
- les phénols polyalcoxylés (éthoxylés, propoxylés, éthopropoxylés) substitués par au moins un radical alkyle en C₄-C₂₀, de préférence en C₄-C₁₂, ou substitués par au moins un radical alkylaryle dont la partie alkyle est en C₁-C₆. Plus particulièrement, le nombre total de motifs alcoxylés est compris entre 2 et 100. A titre d'exemple, on peut citer les mono-, di- ou tri (phényléthyl) phénols polyalcoxylés, ou les nonylphénols polyalcoxylés. Parmi les di- ou tristyrylphenols éthoxylés et/ou propoxylés, sulfatés et/ou phosphatés, on peut citer, le di-(phényl-1 éthyl)phénol éthoxylé, contenant 10 motifs oxyéthylénés, le di-(phényl-1 éthyl)phénol éthoxylé, contenant 7 motifs oxyéthylénés, le di-(phényl-1 éthyl)phénol éthoxylé sulfaté, contenant 7 motifs oxyéthylénés, le tri-(phényl-1 éthyl)phénol éthoxylé, contenant 8 motifs oxyéthylénés, le tri-(phényl-1 éthyl)phénol éthoxylé, contenant 16 motifs oxyéthylénés, le tri-(phényl-1 éthyl)phénol éthoxylé sulfaté, contenant 16 motifs oxyéthylénés, le tri-(phényl-1 éthyl)phénol éthoxylé, contenant 20 motifs oxyéthylénés, le tri-(phényl-1 éthyl)phénol éthoxylé phosphaté, contenant 16 motifs oxyéthylénés.
- les alcools ou les acides gras en C₆-C₂₂, polyalcoxylés (éthoxylés, propoxylés, éthopropoxylés). Le nombre des motifs alcoxylés est compris entre 1 et 60. Le terme acide gras éthoxylé inclut aussi bien les produits obtenus par éthoxylation d'un acide gras par l'oxyde d'éthylène que ceux obtenus par estérification d'un acide gras par un polyéthylèneglycol.
- les triglycérides polyalcoxylés (éthoxylés, propoxylés, éthopropoxylés) d'origine végétale ou animale. Ainsi conviennent les triglycérides issus du saindoux, du suif, de l'huile d'arachide, de l'huile de beurre, de l'huile de graine de coton, de l'huile de lin, de l'huile d'olive, de l'huile de palme, de l'huile de pépins de raisin, de l'huile de poisson, de l'huile de soja, de l'huile de ricin, de l'huile de colza, de l'huile de coprah, de l'huile de noix de coco, et comprenant un nombre total de motifs alcoxylés compris entre 1 et 60. Le terme triglycéride éthoxylé vise aussi bien les produits obtenus par éthoxylation d'un triglycéride par l'oxyde d'éthylène que ceux obtenus par trans-estérification d'un triglycéride par un polyéthylèneglycol.
- les esters de sorbitan éventuellement polyalcoxylés (éthoxylés, propoxylés, éthopropoxylés), plus particulièrement les esters de sorbitol cyclisé d'acides gras de C₁₀ à C₂₀ comme l'acide laurique, l'acide stéarique ou l'acide oléique, et comprenant un nombre total de motifs alcoxylés compris entre 2 et 50.

Des émulsifiant utiles sont notamment les produits suivants, tous commercialisés par Rhodia:
- Soprophor^{®} TSP/724: tensioactif à base de tristyrylphénol éthopropoxylé
- Soprophor^{®} 796/O: tensioactif à base de tristyrylphénol éthopropoxylé
- Soprophor^{®} CY 8: tensioactif à base de tristyrylphénol éthoxylé
- Soprophor^{®} BSU: tensioactif à base de tristyrylphénol éthoxylé
- Alkamuls^{®} RC: tensioactif à base d'huile de ricin éthoxylée
- Alkamuls^{®} OR/36: tensioactif à base d'huile de ricin éthoxylée
- Alkamuls^{®} T/20: tensioactif à base d'un ester de sorbitan
- Geronol^{®} RH-796: Mélange de tensioactifs
- Soprophor^{®} TS/10: tensioactif à base de tristyrylphénol éthoxylé
- Geronol^{®} FF/4-E: Mélange de tensioactifs
- Geronol^{®} TE/777: Mélange de tensioactifs
- Rhodacal^{®} 60/BE: Calcium dodecylbenzene sulfonate
- Geronol^{®} TBE/724: Mélange de tensioactifs
- Geronol^{®} PVA: Mélange de tensioactifs
- Antarox^{®} B/848: Copolymère à blocs Oxyde d'Ethylène/Oxyde de Propylène
- Geronol^{®} FF/6-E: Mélange de tensioactifs

La formulation comprend avantageusement au moins 4%, de préférence au moins 5%, de préférence au moins 8%, en poids de matière sèche, d'au moins un tensioactif c). Sans vouloir être lié à une quelconque théorie, on pense que le système solvant est avantageusement associé à des quantités relativement importantes de solvant par rapport à ce qui peut être usuellement utilisé pour des formulations comprenant de la NMP. On outre on pense que cela peut être lié à une relativement importante affinité pour l'eau.

On mentionne que le système solvant (ou la composition solvante) peut être associé à un tensioactif aromatique et/ou non aromatique.

### Formulation

La formulation, concentrée, ne comprend pas des quantités importantes d'eau. Typiquement la teneur en eau est inférieure à 50% en poids, avantageusement inférieure à 25% en poids. Elle sera généralement inférieure à 10% en poids.

La formulation est de préférence un formulation liquide, par exemple sous forme d'un concentré emulsifiable (EC), d'une émulsion concentrée (EW) ou d'une micorémulsion (ME). Dans ce cas elle comprend de préférence moins de 500 g/L d'eau, plus préférablement moins de 250 g/L. Elle sera généralement inférieure à 100 g/L.

Les formulations peuvent avantageusement comprendre:
a) de 4 à 60%, de préférence de 10 à 50%, du produit phytosanitaire, en poids de matière active,
b) de 10 à 92%, de préférence de 20 à 80%, du système solvant, en poids,
c) de 4 à 60%, de préférence de 5 à 50%, de préférence de 8 à 25%, en poids de matière sèche, d'un émulsifiant, de préférence d'un tensioactif,
d) de 0 à 10% en poids d'eau.

Selon un mode particulier de réalisation la formulation comprend:
- de 15 à 35% en poids de tébuconazole
- de 40 à 65% en poids du système solvant préféré,
- de 5 à 15% en poids de matière sèche d'au moins un tensioactif, et
- optionnellement jusqu'à 20% d'un autre additif.

Selon un autre mode particulier de réalisation la formulation comprend:
- de 15 à 35% en poids d'oxyfluorfen,
- de 50 à 75% en poids du système solvant préféré,
- de 5 à 15% en poids de matière sèche d'au moins un tensioactif, et
- optionnellement jusqu'à 10% d'un autre additif.

Selon un autre mode particulier de réalisation la formulation comprend:
- de 25 à 45% en poids de Propanil,
- de 25 à 45% en poids du système solvant préféré,
- de 10 à 25% en poids de matière sèche d'au moins un tensioactif, et
- optionnellement jusqu'à 20% d'un autre additif.

Selon un autre mode particulier de réalisation la formulation comprend:
- de 10 à 25% en poids de Phenmedipham,
- de 35 à 55% en poids du système solvant préféré,
- de 10 à 25% en poids de matière sèche d'au moins un tensioactif, et
- optionnellement jusqu'à 30% d'un autre additif, de préférence de 10 à 30% d'un autre solvant et/ou d'un inhibiteur de cristallisation.

Il n'est pas exclu de réaliser des formulation solides, par exemple des formulations dans lesquelles un liquide comprenant le produit phytosanitaire solubilisé dans le solvant ou le mélange de solvant ou la composition solvante, est supporté par un minéral et/ou dispersé dans une matrice solide.

La formulation peut bien entendu comprendre d'autres ingrédients (ou "autres additifs") que le produit phytosanitaire actif, le(s) solvant(s), le(s) agent(s) émulsifiant(s) optionnel(s) et l'eau optionnelle. Elle peut notamment comprendre des agent de modification de la viscosité, des agents antimousse, notamment des antimousse siliconnés, des agents anti-rebond, des agents anti-lessivage, des charges inertes, notamment des charges minérales, des agents anti-gel...

Notamment les formulations peuvent comprendre des additifs, dits autres additifs, ne rentrant pas dans la définition des produits a), b), ou c), comme:
- d'autres solvants, généralement en faible quantité, par exemple en quantité inférieure à la quantité des solvant b1), b2) et b3), c'est-à-dire en quantité inférieure au solvant du système solvant étant présent dans la plus faible quantité. Un solvant autre n'est pas entendu comme faisant partie du système solvant. A titre d'autres solvants on cite notamment les solvants de la famille des phosphates, phosphonates ou des oxydes de phosphines comme le TEBP, le TBP, le TEPO, le DBBP. On cite également les alkyldiméthyleamides où l'alkyl est en C₆-C₁₈, notamment ceux commercialisés sous la marque Genagen^{®}. On cite également les lactates d'esters, notamment ceux commercilisés sous la marque Purasolv^{®}. On cite également les esters méthyliques d'acides gras, notamment ceux commercialisés sous la marque Phytorobe^{®}. On cite également les diesters de diacides ("DiBasic Esters" en anglais), notamment ceux commercialisé par Rhodia sous les marques Rhodiasolv^{®} RPDE, et Rhodiasolv^{®} DIB. On cite également les coupes d'hydrocarbures, les amides cycliques, les lactones.
- des inhibiteurs de cristallisation. Il peut s'agir des solvants mentionnés ci-dessus. Il peut également s'agir d'acides gras ou d'alcools gras non polyalkoxylés. On cite par exemple le produit Alkamuls^{®} OL700.

### Procédé

Des procédés classiques de préparation de formulations phytosanitaires ou de mélanges de solvants peuvent être mis en oeuvre. On peut opérer par simple mélange des constituants.

On peut notamment introduire les différents solvants séparément. On peut également introduire un mélange de solvant préparé au préalable, typiquement la composition solvante.

La composition solvante peut être préparée par simple mélange des solvants.

### Utilisation de la formulation phytosanitaire

La formulation phytosanitaire concentrée est destinée à être répandue sur un champ cultivé ou à cultiver, par exemple un champ de soja, le plus souvent après dilution dans de l'eau, pour obtenir une composition diluée. La dilution est généralement opérée par l'exploitant agricole, directement dans un réservoir ("tank-mix"); par exemple dans le réservoir d'un dispositif destiné à répandre la composition. Il n'est pas exclu que l'exploitant ajoute d'autres produits phytosanitaires, par exemple des fongicides, herbicides, pesticides, insecticides, des fertilisants. Ainsi, la formulation peut être utilisée pour préparer une composition diluée dans l'eau du produit phytosanitaire actif, par mélange d'au moins une part en poids de formulation concentrée avec au moins 10 parts d'eau, de préférence moins de 1000 parts. Les taux de dilution et les quantités à appliquer sur le champ dépendent généralement du produit phytosanitaire et de la dose souhaitable pour traiter le champ; cela peut être déterminé par l'exploitant agricole.

D'autres détails ou avantages de l'invention apparaîtront au vu des exemples qui suivent sans caractère limitatif.

### EXEMPLES

On utilise les ingrédients suivants:
- Acétate de Cyclohexyle
- Acétate de 2-éthylehexyle
- DMSO
- Acétophénone
- Oxyfluorfen: à 95-98% en matière active.
- Tebuconazole à 96,34% en matière active.
- Phenmedipham: à 95-97% en matière active.
- Triadimenol: à 95-97%% en matière active
- Propoxur à 97-99% en matière active
- Propanil à 97-99% en matière active
- Pendimethalin à 95% en matière active
- Trifluralin
- Imidacloprid
- Diméthoate
- Geronol^{®} TBE724, Rhodia: tensioactif comprenant plus de 50% en poids de tristyrylphénol ethopropoxylé.
- Geronol^{®} TE/300, Rhodia: Mélange tensioactif propriétaire comprenant de l'huile de ricin éthoxylée et un alcool éthopropoxylé
- Alkamuls^{®} RC, Rhodia: tensioactif huile de ricin éthoxylée
- Geronol^{®} PR/500, Rhodia: Mélange tensioactif propriétaire
- Geronol^{®} VB/999, Rhodia: Mélange tensioactif propriétaire
- Rhodiasolv^{®} ADMA10, Rhodia (zone Asie Pacifique): Solvant alkyldiméthylamide
- Alkamuls^{®} OL/700, Rhodia: Acide oléique

### Exemples 1 à 6

On prépare les systèmes solvants suivants:

| Exemple | 1 | 2 | 3 C | 4 C | 5 C | 6 | 7 |
|---|---|---|---|---|---|---|---|
| Solvant | MIX 1 | MIX 2 | MIX 3 | MIX 4 | MIX 5 | MIX 6 | MIX 7 |
| Acétophenone (AP) | 27,4 | 24,5 | 50 | 50 | 0 | 24,5 | 24,5 |
| Acétate de Cyclohexyle (CA) | 37,0 | 40,0 | 50 | 0 | 50 | 0 | 0 |
| DMSO | 35,6 | 35,5 | 0 | 50 | 50 | 35,5 | 35,5 |
| Acétate de 2-éthylhexyle | 0 | 0 | 0 | 0 | 0 | 40,0 | 40,0 |
| Acétate de décyle | 0 | 0 | 0 | 0 | 0 | 0 | 0 |

### Exemples 8 à 16 - Tebuconazole

Par mélange des ingrédients, on prépare des formulations de Tebuconazole à 25%, de type concentré émulsionnable (EC). Les formulations comprennent 25% en poids (de matière active) de Tebuconazole, 10% en poids de tensioactif Alkamuls^{®} RC, et le reste de solvant.

On effectue les tests suivants:
- Observation visuelle à 25°C - On note l'aspect de la formulation et on repère éventuellement la présence de cristaux
- Observation visuelle à 0°C - On place la formulation pendant 7 jours à 0°C et on note l'aspect de la formulation et on repère éventuellement la présence de cristaux (test CIPAC MT39)
- Observation visuelle à 0°C avec nucléation: On introduit un cristal de la matière active dans la formulation ayant passé 7 jours à 0°C pour nucléation, et on place à nouveau la formulation pendant 7 jours à 0°C. On note l'aspect de la formulation et on repère éventuellement la présence de cristaux.

| Exemple | Système Solvant | Apparence à 25°C | Apparence à 0°C | Apparence à 0°C avec nucléation |
|---|---|---|---|---|
| 8C | Acétophénone 100% | Trouble | Cristaux | / |
| 9C | DMSO 100% | Limpide | Cristaux | / |
| 10C | MIX 3 | Limpide | Limpide | Cristaux |
| 11C | MIX 4 | Limpide | Limpide | Cristaux |
| 12C | MIX 5 | Limpide | Limpide | Cristaux |
| 13 | Mix 1 | Limpide | Limpide | Limpide |
| 14 | Mix 2 | Limpide | Limpide | Limpide |
| 15 | MIX 6 | Limpide | Limpide | Limpide |
| 16 | MIX 7 | Limpide | Limpide | Limpide |

| | | | | |
|---|---|---|---|---|
| La lettre C indique qu'il s'agit d'un exemple comparatif | | | | |

Ces exemples montrent que:
- les associations à deux solvants permettent d'améliorer les formulations (pas de cristaux à 0°C)
- les associations à trois solvants permettent d'améliorer encore plus les formulations (pas de cristaux à 0°C avec nucléation)

### Exemples 17 à 21 - Oxyfluorfen

Par mélange des ingrédients, on prépare des formulations d'Oxyfluorfen à 22%, de type concentré émulsionnable (EC). Les formulations comprennent 22% en poids (de matière active) d'Oxyfluorfen, 10% en poids de tensioactif Alkamuls^{®} RC, et le reste de solvant.

| Exemple | Système Solvant | Apparence à 25°C | Apparence à 0°C | Apparence à 0°C avec nucléation |
|---|---|---|---|---|
| 17C | Acétophénone 100% | Limpide | Limpide | Cristaux |
| 18C | DMSO 100% | Limpide | Solide | / |
| 19C | MIX 4 | Limpide | Limpide | Cristaux |
| 20 | Mix 1 | Limpide | Limpide | Limpide |
| 21 | Mix 2 | Limpide | Limpide | Limpide |

| | | | | |
|---|---|---|---|---|
| La lettre C indique qu'il s'agit d'un exemple comparatif | | | | |

Ces exemples montrent que:
- les associations à deux solvants permettent d'améliorer les formulations (pas de cristaux à 0°C)
- les associations à trois solvants permettent d'améliorer encore plus les formulations (pas de cristaux à 0°C avec nucléation)

### Exemples 22 à 32 - Autres actifs

Par mélange des ingrédients, on prépare des formulations de divers actifs phytosanitaires, de type concentré émulsionnable (EC).

Les formulations comprennent:
- l'actif, en quantité en poids (de matière active) indiquée dans le tableau ci-dessous,
- 10% en poids de tensioactif Alkamuls^{®} RC
- et le reste de solvant "Mix2".

| Exemple | Actif | Apparence à 25°C | Apparence à 0°C | Apparence à 0°C avec nucléation |
|---|---|---|---|---|
| 22 | Phenmedipham - 16% | Limpide | Limpide | Limpide |
| 23 | Triadimenol - 23% | Limpide | Limpide | Limpide |
| 24 | Propuxur - 20% | Limpide | Limpide | Limpide |
| 25 | Alachlor - 48% | Limpide | Limpide | / |
| 26 | Chlorpyrifos - 40% | Limpide | Limpide | Limpide |
| 27 | Apha-cypermétrine - 10% | Limpide | Limpide | Limpide |
| 28 | Pendimethalin - 33% | Limpide | Limpide | / |
| 29 | Trifluralin - 40% | Limpide | Limpide | Limpide |
| 30 | Dimethoate - 40% | Limpide | Limpide | Limpide |
| 31 | Propanil - 36% | Limpide | Limpide | Limpide |
| 32 | Imidacloprid - 20% | Limpide | Limpide | / |

### Exemples 33 à 42 - Autres actifs

Par mélange des ingrédients, on prépare des formulations de divers actifs phytosanitaires, de type concentré émulsionnable (EC).

Les formulations comprennent:
- l'actif, en quantité en poids (de matière active) indiquée dans le tableau ci-dessous,
- 10% en poids de tensioactif Alkamuls^{®} RC
- et le reste de solvant "Mix6".

| Exemple | Actif | Apparence à 25°C | Apparence à 0°C | Apparence à 0°C avec nucléation |
|---|---|---|---|---|
| 33 | Phenmedipham - 16% | Limpide | Limpide | Limpide |
| 34 | Triadimenol - 23% | Limpide | Limpide | / |
| 35 | Propuxur - 20% | Limpide | Limpide | Limpide |
| 36 | Alachlor - 48% | Limpide | Limpide | / |
| 37 | Chlorpyrifos - 40% | Limpide | Limpide | Limpide |
| 38 | Apha-cypermétrine - 10% | Limpide | Limpide | Limpide |
| 39 | Pendimethalin - 33% | Limpide | Limpide | / |
| 40 | Trifluralin - 40% | Limpide | Limpide | Limpide |
| 41 | Dimethoate - 40% | Limpide | Limpide | Limpide |
| 42 | Propanil - 36% | Limpide | Limpide | Limpide |

### Exemples 43 à 48 - Autres actifs

Par mélange des ingrédients, on prépare des formulations de divers actifs phytosanitaires, de type concentré émulsionnable (EC).

Les formulations comprennent:
- l'actif, en quantité en poids (de matière active) indiquée dans le tableau ci-dessous,
- 10% en poids de tensioactif Alkamuls^{®} RC
- et le reste de solvant "Mix7".

| Exemple | Actif | Apparence à 25°C | Apparence à 0°C | Apparence à 0°C avec nucléation |
|---|---|---|---|---|
| 43 | Phenmedipham - 16% | Limpide | Limpide | Limpide |
| 44 | Propuxur - 20% | Limpide | Limpide | Limpide |
| 45 | Chlorpyrifos - 40% | Limpide | Limpide | Limpide |
| 46 | Trifluralin - 40% | Limpide | Limpide | Limpide |
| 47 | Dimethoate - 40% | Limpide | Limpide | Limpide |
| 48 | Propanil - 36% | Limpide | Limpide | Limpide |

### Exemple 49 Formulations optimisées

Par mélange des ingrédients, on prépare des formulations de divers actifs phytosanitaires, de type concentré émulsionnable (EC). Les ingrédients et leurs quantités sont indiqués ci-dessous. Tous les ingrédients marqués d'un ^{®} sont disponibles auprès de Rhodia.

49.1 EC Oxyfluorfen 23%:

| | |
|---|---|
| - Oxyfluorfen | 24,2% (tel quel) |
| - Mix 2 | 65,8% |
| - Geronol^{®} TBE 724 | 10% (tel quel) |

49.2 EC Tebuconazole 25% (250 g/L)

| | |
|---|---|
| - Tebuconazole | 26,2% (261 g/L) (tel quel) |
| - Mix 2 | 53,8% (535 g/L) |
| - Geronol^{®} TE/300 | 10% (100 g/L) (tel quel) |
| - Alkamuls^{®} OL/700 | 10% (100 g/L) (tel quel) |

49.3 EC Propanil 36%

| | |
|---|---|
| - Propanil | 36,7% (tel quel) |
| - Mix 2 | 35,3% |
| - Geronol^{®} PR/500 | 18% (tel quel) |
| - Alkamuls^{®} OL/700 | 10% (100 g/L) (tel quel) |

49.4 EC Phenmedipham 16%

| | |
|---|---|
| - Phenmedipham | 16,5% (tel quel) |
| - Mix 2 | 43,5% |
| - Rhodiasolv^{®} ADMA10 | 20% (tel quel) |
| - Geronol^{®} VB/999 | 20% (tel quel) |

49.5 EC Fenvalerate 20%

| | |
|---|---|
| Fenvalerate tech.94% | 21,3% |
| Mix 2 | 70,7% |
| Geronol^{®} TBE/724 | 8 % |

49.6 EC Deltamethrin 5%C

| | |
|---|---|
| Deltamethrin tech.98% | 5,1% |
| Mix 2 | 84,9% |
| Rhodacal^{®} 60/BE | 3% |
| Soprophor^{®} 796/P | 7% |

49.7 EC Benomyl 19 %

| | |
|---|---|
| Benomyl tech.98% | 19,4% |
| Mix 2 | 75,6% |
| Soprophor^{®} TSP/724 | 4,5% |
| Rhodacal^{®} 60/BE | 0,5% |

49.8 EC Trifluralin 480 g/l

| | |
|---|---|
| Trifluralin tech.96% | 500 g/L |
| Mix 2 | 550 g/L |
| Geronol^{®} TFG/48 | 100 g/L |

49.9 EC Abamectin 18 g/l

| | |
|---|---|
| Abamectin tech.97% | 19 g/l |
| MIX 6 | 875 g/l |
| Geronol^{®} RH-796 | 100 g/l |

49.10 EC Amicarbazone 25%

| | |
|---|---|
| Abamectin tech.96% | 25,5 % |
| MIX 6 | 59,5 % |
| Soprophor^{®} TS/10 | 12 % |
| Geronol^{®} FF/4-E | %3 |

49.11 EC Alpha-Cypermethrin 10 %

| | |
|---|---|
| Alpha-Cypermethrin tech.93% | 11 % |
| MIX 6 | 79 % |
| Geronol^{®} TE/300 | 10 % |

49.12 EC Bifenthrin 100 g/l

| | |
|---|---|
| Bifenthrin tech.98% | 102 g/l |
| MIX 6 | 806 g/l |
| Geronol^{®} TE/300 | 100 g/l |

49.13 EC Carbosulfan 250 g/l

| | |
|---|---|
| Carbosulfan tech.90% | 278 g/l |
| MIX 6 | 584 g/l |
| Geronol^{®} TE/300 | 150 g/l |

49.14 EC Cyfluthrin100 g/l

| | |
|---|---|
| Cyfluthrin tech.98,5% | 102 g/l |
| MIX 6 | 815 g/l |
| Geronol^{®} TE/300 | 100 g/l |

49.15 EC Cypermethrin 200 g/l

| | |
|---|---|
| Cyfluthrin tech.98% | 218 g/l |
| MIX 6 | 714 g/l |
| Geronol^{®} TBE/724 | 100 g/l |

49.16 EC Difenconazole 250 g/l

| | |
|---|---|
| Difenconazole tech.95,5% | 262 g/l |
| MIX 6 | 698 g/l |
| Geronol^{®} FF/4-E | 5 g/l |
| Geronol^{®} FF/6-E | 95 g/l |

49.17 EC Deltamethrin 5%

| | |
|---|---|
| Deltamethrin tech.98% | 5,1 % |
| MIX 2 | 54,9 % |
| Methyl ester | 30 % |
| Rhodacal^{®} 60/BE | 3,5% |
| Geronol^{®} TE/777 | 6,5% |

49.18 EC Etofenprox 30%

| | |
|---|---|
| Etofenprox tech.98% | 30,6 % |
| MIX 2 | 59,4% |
| Geronol^{®} TE/300 | 10% |

49.19 EC Fenoxaprop-ethyl 10%

| | |
|---|---|
| Fenvalerate tech.95% | 10,6 % |
| MIX 6 | 66,4% |
| Rhodiasolv^{®} RPDE | 15% |
| Geronol^{®} TE/300 | 8% |

49.20 EC Fipronil 5%

| | |
|---|---|
| Fipronil tech.96% | 5,2 % |
| MIX 6 | 59,8% |
| Rhodiasolv^{®} RPDE | 25% |
| Geronol^{®} ND-80 | 10% |

49.21 EC Fluazifop-p-butyl 125 g/l

| | |
|---|---|
| Fluazifop-p-butyl tech.93% | 135 g/l |
| MIX 6 | 778 g/l |
| Geronol^{®} TE/300 | 100 g/l |

49.22 EC Flufenoxuron 50 g/l

| | |
|---|---|
| Flufenoxuron tech.98% | 51 g/l |
| MIX 6 | 628 g/l |
| Geronol^{®} TE/300 | 100 g/l |

49.23 ECFlufenoxuron 100 g/l

| | |
|---|---|
| Flufenoxuron tech.98% | 102 g/l |
| MIX 6 | 822 g/l |
| Geronol^{®} TE/300 | 100 g/l |

49.24 EC Hexaxinone 250 g/l

| | |
|---|---|
| Hexaxinone tech.97% | 258 g/l |
| MIX 2 | 682 g/l |
| Geronol^{®} TE/777 | 100 g/l |

49.25 EC Lambda-cyalothrin 110 g/l

| | |
|---|---|
| Lambda-cyalothrin tech.95% | 116 g/l |
| MIX 6 | 794 g/l |
| Geronol^{®} TE/300 | 100 g/l |

49.26 EC Metomyl 190 g/l

| | |
|---|---|
| Metomyl tech.98% | 195 g/l |
| MIX 2 | 650 g/l |
| Rhodiasolv^{®} RPDE | 180 g/l |
| Rhodacal^{®} 60/BE | 2,5 g/l |
| Soprophor^{®} TSP/724 | 47,5 g/l |

49.27 EC Oxyfluorfen 22%

| | |
|---|---|
| Oxyfluorfen tech.95% | 23,2 % |
| MIX 2 | 69,3 % |
| Geronol^{®} TBE/724 | 6,5% |
| Geronol^{®} PVA | 1% |

49.28 EC Permethrin 200 g/l

| | |
|---|---|
| Permethrin tech.95% | 211 g/l |
| MIX 6 | 725 g/l |
| Geronol^{®} TE/300 | 100 g/l |

49.29 EC Prochloraz 370 g/l

| | |
|---|---|
| Prochloraz tech.97,5% | 380 g/l |
| MIX 6 | 613 g/l |
| Soprophor^{®} CY8 | 60 g/l |
| Antarox^{®} B/848 | 10 g/l |
| Rhodacal^{®} 60/BE | 30 g/l |

49.30 EC Propiconazole 250 g/l

| | |
|---|---|
| Propiconazole tech.95% | 264 g/l |
| MIX 6 | 686 g/l |
| Geronol^{®} FF/4-E | 15 g/l |
| Geronol^{®} FF/6-E | 85 g/l |

49.31 EC Propoxur 20%

| | |
|---|---|
| Propoxur tech.98% | 20,4 % |
| MIX 2 | 69,6% |
| Geronol^{®} FF/4-E | 3,5% |
| Alkamuls^{®} OR/36 | 6,5% |

49.32 EC Tebuconazole 200 g/l

| | |
|---|---|
| Tebuconazole tech.93% | 215 g/l |
| MIX 6 | 575 g/l |
| Geronol^{®} TE/300 | 200 g/l |
| Alkamuls^{®} OL/700 | 50 g/l |

49.33 EC Triadimenol 23 %

| | |
|---|---|
| Triadimenol tech.95% | 24,2 % |
| MIX 2 | 49,8% |
| Rhodiasolv^{®} ADMA 10 | 17% |
| Antarox^{®} B/848 | 10% |

### Exemple 50 - Formulation optimisée et données de mise en émulsion

Par mélange des ingrédients, on prépare le concentré émulsionnable (EC) ci-dessous.

EC Tebuconazole 25% (250 g/L)

| | |
|---|---|
| - Tebuconazole tec.96% | 25% (en actif) (260,1 g/L tel quel) |
| - Mix 6 | 51% (529,5 g/L) |
| - Geronol^{®} TE/300 | 14,4% (150 g/L) (tel quel) |
| - Alkamuls^{®} OL/700 | 9,6% (100 g/L) (tel quel) |

On effectue les tests suivants:
- pH: test CIPAC MT75
- Densité à 20°C
- Stabilité après dilution ("émulsification"): test CIPAC MT36, effectué à des concentrations après dilution de 0,1%, 1%, et 5% à 30°C, avant (à 2 heures et 24 heures de l'émulsification) et après stockage 14 jours à 54°C, avec des duretés en eau A (20 ppm), D (342 ppm), C (500 pm) ou 1.000 ppm.
- Teste d'apparence de la formulation à 0°C ou à 54°C:test CIPAC MT39 (0°C) et MT 46 (54°C).

Les résultats sont les suivants:
- Densité à 20°C: 1,040
- pH (5% sol.): 6,4

Emulsification dilution:

| | A | D | C |
|---|---|---|---|
| Emulsification 0,1%, 30°C, après 2h | OK | OK | OK |
| Emulsification 0,1%, 30°C, après 24h | OK | OK | OK |
| Emulsification 1%, 30°C, après 2h | OK | OK | OK |
| Emulsification 1%, 30°C, après 24h | OK | OK | OK |
| Emulsification 5%, 30°C, après 2h | OK | OK | OK |
| Emulsification 5%, 30°C, après 24h | OK | OK | OK |
| Après 14 jours à 54°C Emulsification 0,1%, 30°C, après 2h | OK | OK | OK |
| Après 14 jours à 54°C Emulsification 5%, 30°C, après 2h | OK | OK | OK |

- Apparence 0°C: solution claire, OK
- Apparence 54°C: solution claire, OK

## Revendications

1. Formulation phytosanitaire concentrée comprenant:
a) un produit phytosanitaire actif,
b) un système solvant comprenant les trois solvants suivants:
b1) de 20 à 70% en poids d'un acétate d'alkyle dont le groupe alkyle est un alkyle en C₆-C₁₂,
b2) de 20 à 70% en poids d'un sulfoxyde, et
b3)de 10 à 60% en poids d'acétophénone,
ces quantités étant exprimées par rapport à la somme des solvants b1), b2) et b3), égale à 100%,
c) éventuellement au moins agent émulsifiant, de préférence un tensioactif, et
d) éventuellement de l'eau.

2. Formulation selon la revendication précédente, **caractérisée en ce que** l'alkyle du solvant b1) est choisi parmi le cyclohexyle, l'hexyle, l'éthylhexyle, l'octyle, l'isooctyle, le décyle, l'isodécyle.

3. Formulation selon l'une des revendications précédentes, **caractérisée en ce que** le sulfoxyde b2) est le DiMéthylSulfOxyde (DMSO).

4. Formulation selon l'une des revendications précédentes, **caractérisée en ce que** le système solvant comprend les solvants suivants:
b1) Acétate de cyclohexyle,
b2) DiMéthylSulfOxyde (DMSO), et
b3) Acétophénone

5. Formulation selon l'une des revendications précédentes **caractérisée en ce que** le système solvant comprend:
- de 30 à 50% en poids du solvant b1),
- de 25 à 45% en poids du solvant b2), et
- de 15 à 35% en poids du solvant b3).

6. Formulation selon la revendication 5, **caractérisée en ce que** le système solvant comprend:
- de 30 à 50% en poids d'acétate de cyclohexyle,
- de 25 à 45% en poids de diméthylesulfoxyde, et
- de 15 à 35% en poids d'acétophénone.

7. Formulation selon l'une des revendications précédentes, **caractérisée en ce que** le produit phytosanitaire actif est un herbicide, un insecticide, un acaricide, un agent d'élimination des rongeurs, ou un fongicide.

8. Formulation selon l'une des revendications précédentes, **caractérisée en ce que** le produit phytosanitaire actif est choisi parmi les composés suivants:
- Alachlor,
- Chlorpyrifos,
- alpha-cyperméthrine,
- Phenmedipham,
- Propanil,
- Pendimethalin,
- les azoles, de préférence les triazoles, de préférence le tebuconazole,
- triadimenol,
- Trifluralin,
- Oxyfluorfen,
- Imidacloprid,
- Dimethoate, et
- Proxopur.

9. Formulation selon l'une des revendications précédentes **caractérisée en ce qu'**elle comprend au moins 4%, de préférence au moins 5%, de préférence au moins 8%, en poids de matière sèche, d'au moins un tensioactif c).

10. Formulation selon l'une des revendications précédentes, **caractérisée en ce qu'**elle comprend:
a) de 4 à 60%, de préférence de 10 à 50%, du produit phytosanitaire, en poids de matière active,
b) de 10 à 92%, de préférence de 20 à 80%, de système solvant, en poids,
c) de 4 à 60%, de préférence de 5 à 50%, de préférence de 8 à 25%, en poids de matière sèche, d'un émulsifiant, de préférence d'un tensioactif, et
d) de 0 à 10% en poids d'eau.

11. Formulation selon l'une des revendications précédentes, **caractérisée en ce qu'**elle comprend:
- de 15 à 35% en poids de tébuconazole,
- de 40 à 65% en poids du système solvant selon la revendication 6,
- de 5 à 15% en poids de matière sèche d'au moins un tensioactif, et
- optionnellement jusqu'à 20% d'un autre additif.

12. Formulation selon l'une des revendications 1 à 10, **caractérisée en ce que** qu'elle comprend:
- de 15 à 35% en poids d'oxyfluorfen,
- de 50 à 75% en poids du système solvant selon la revendication 6,
- de 5 à 15% en poids de matière sèche d'au moins un tensioactif, et
- optionnellement jusqu'à 10% d'un autre additif.

13. Formulation selon l'une des revendications 1 à 10, **caractérisée en ce que** qu'elle comprend:
- de 25 à 45% en poids de Propanil,
- de 25 à 45% en poids du système solvant selon la revendication 6,
- de 10 à 25% en poids de matière sèche d'au moins un tensioactif, et
- optionnellement jusqu'à 20% d'un autre additif.

14. Formulation selon l'une des revendications 1 à 10, **caractérisée en ce que** qu'elle comprend:
- de 10 à 25% en poids de Phenmedipham,
- de 35 à 55% en poids du système solvant selon la revendication 6,
- de 10 à 25% en poids de matière sèche d'au moins un tensioactif, et
- optionnellement jusqu'à 30% d'un autre additif, de préférence de 10 à 30% d'un autre solvant et/ou d'un inhibiteur de cristallisation.

15. Formulation selon l'une des revendications précédentes, **caractérisée en ce qu'**elle comprend un tensioactif c), le tensioactif étant choisi parmi les tensioactifs non ioniques, les tensioactifs anioniques, les tensioactifs amphotères, et leurs mélanges ou associations.

16. Formulation selon l'une des revendications précédentes, **caractérisée en ce qu'**elle est sous forme d'un concentré émulsifiable, d'une émulsion concentrée ou d'une microémulsion, comprenant moins de 500 g/L d'eau.

17. Utilisation de la formulation selon l'une des revendications précédentes pour préparer une composition diluée dans l'eau du produit phytosanitaire actif, par mélange d'au moins une part en poids de formulation concentrée avec au moins 10 parts d'eau, de préférence moins de 1000 parts.

18. Composition solvante comprenant un mélange de solvants, **caractérisée en ce qu'**elle comprend:
- de 20 à 70 %, de préférence de 30 à 50%, en poids d'un solvant b1) acétate d'alkyle dont le groupe alkyle comprend au moins 3 atomes de carbone,
- de 20 à 70 %, de préférence de 25 à 45%, en poids d'un solvant b2) sulfoxyde, et
- de 10 à 60 %, de préférence de 15 à 35%, en poids d'un solvant b3) cétone.

19. Composition solvante selon la revendication 18, **caractérisée en ce qu'**elle comprend:
b1) de 30 à 50%, en poids d'acétate de cyclohexyle ou d'éthylhexyle,
b2) de 25 à 45%, en poids de DiMéthylSulfOxyde (DMSO), et
b3) de 15 à 35%, en poids d'acétophénone.

20. Composition solvante selon l'une des revendications 18 ou 19, **caractérisée en ce que**:
- elle ne comprend substantiellement pas d'eau,
- elle ne comprend substantiellement pas de produit phytosanitaire actif, et
- elle comprend éventuellement d'autres solvants et/ou tensioactif.

## Patentansprüche

1. Konzentrierte Pflanzenschutzformulierung, umfassend:
a) einen Pflanzenschutzwirkstoff,
b) ein Lösungsmittelsystem, das die drei folgenden Lösungsmittel umfasst:
b1) 20 bis 70 Gew.-% eines Alkylacetats, dessen Alkylgruppe ein C₆-C₁₂-Alkyl ist,
b2) 20 bis 70 Gew.-% eines Sulfoxids und
b3) 10 bis 60 Gew.-% Acetophenon,
wobei diese Mengen bezogen auf die Summe der Lösungsmittel b1), b2) und b3), die gleich 100 % ist, ausgedrückt sind,
c) gegebenenfalls mindestens einen Emulgator, vorzugsweise ein Tensid, und
d) gegebenenfalls Wasser.

2. Formulierung nach dem vorhergehenden Anspruch, **dadurch gekennzeichnet, dass** das Alkyl des Lösungsmittels b1) aus Cyclohexyl, Hexyl, Ethylhexyl, Octyl, Isooctyl, Decyl, Isodecyl ausgewählt ist.

3. Formulierung nach einem der vorhergehenden Ansprüche, **dadurch gekennzeichnet, dass** das Sulfoxid b2) DiMethylSulfOxid (DMSO) ist.

4. Formulierung nach einem der vorhergehenden Ansprüche, **dadurch gekennzeichnet, dass** das Lösungsmittelsystem die folgenden Lösungsmittel umfasst:
b1) Cyclohexylacetat,
b2) DiMethylSulfOxid (DMSO) und
b3) Acetophenon.

5. Formulierung nach einem der vorhergehenden Ansprüche, **dadurch gekennzeichnet, dass** das Lösungsmittelsystem Folgendes umfasst:
- 30 bis 50 Gew.-% des Lösungsmittels b1),
- 25 bis 45 Gew.-% des Lösungsmittels b2) und
- 15 bis 35 Gew.-% des Lösungsmittels b3).

6. Formulierung nach Anspruch 5, **dadurch gekennzeichnet, dass** das Lösungsmittelsystem Folgendes umfasst:
- 30 bis 50 Gew.-% Cyclohexylacetat,
- 25 bis 45 Gew.-% Dimethylsulfoxid und
- 15 bis 35 Gew.-% Acetophenon.

7. Formulierung nach einem der vorhergehenden Ansprüche, **dadurch gekennzeichnet, dass** der Pflanzenschutzwirkstoff ein Herbizid, ein Insektizid, ein Akarizid, ein Mittel zur Beseitigung von Nagetieren oder ein Fungizid ist.

8. Formulierung nach einem der vorhergehenden Ansprüche, **dadurch gekennzeichnet, dass** der Pflanzenschutzwirkstoff aus den folgenden Verbindungen ausgewählt ist:
- Alachlor,
- Chlorpyriphos,
- alpha-Cypermethrin,
- Phenmedipham,
- Propanil,
- Pendimethalin,
- Azolen, vorzugsweise Triazolen, vorzugsweise Tebuconazol,
- Triadimenol,
- Trifluralin,
- Oxyfluorfen,
- Imidacloprid,
- Dimethoat und
- Propoxur.

9. Formulierung nach einem der vorhergehenden Ansprüche, **dadurch gekennzeichnet, dass** sie mindestens 4 %, vorzugsweise mindestens 5 %, bevorzugt mindestens 8 %, bezogen auf die Trockenmasse, mindestens eines Tensids c) umfasst.

10. Formulierung nach einem der vorhergehenden Ansprüche, **dadurch gekennzeichnet, dass** sie Folgendes umfasst:
a) 4 bis 60 Gew.-%, vorzugsweise 10 bis 50 Gew.-% des Pflanzenschutzmittels, bezogen auf das Gewicht des Wirkstoffs,
b) 10 bis 92 Gew.-%, vorzugsweise 20 bis 80 Gew.-% des Lösungsmittelsystems,
c) 4 bis 60 Gew.-%, vorzugsweise 5 bis 50 Gew.-%, bevorzugt 8 bis 25 Gew.-%, bezogen auf die Trockenmasse, eines Emulgators, vorzugsweise eines Tensids, und
d) 0 bis 10 Gew.-% Wasser.

11. Formulierung nach einem der vorhergehenden Ansprüche, **dadurch gekennzeichnet, dass** sie Folgendes umfasst:
- 15 bis 35 Gew.-% Tebuconazol,
- 40 bis 65 Gew.-% des Lösungsmittelsystems nach Anspruch 6,
- 5 bis 15 Gew.-%, bezogen auf die Trockenmasse, mindestens eines Tensids und
- gegebenenfalls bis zu 20 % eines anderen Zusatzstoffs.

12. Formulierung nach einem der Ansprüche 1 bis 10, **dadurch gekennzeichnet, dass** sie Folgendes umfasst:
- 15 bis 35 Gew.-% Oxyfluorfen,
- 50 bis 75 Gew.-% des Lösungsmittelsystems nach Anspruch 6,
- 5 bis 15 Gew.-%, bezogen auf die Trockenmasse, mindestens eines Tensids und
- gegebenenfalls bis zu 10 % eines anderen Zusatzstoffs.

13. Formulierung nach einem der Ansprüche 1 bis 10, **dadurch gekennzeichnet, dass** sie Folgendes umfasst:
- 25 bis 45 Gew.-% Propanil,
- 25 bis 45 Gew.-% des Lösungsmittelsystems nach Anspruch 6,
- 10 bis 25 Gew.-%, bezogen auf die Trockenmasse, mindestens eines Tensids und
- gegebenenfalls bis zu 20 % eines anderen Zusatzstoffs.

14. Formulierung nach einem der Ansprüche 1 bis 10, **dadurch gekennzeichnet, dass** sie Folgendes umfasst:
- 10 bis 25 Gew.-% Phenmedipham,
- 35 bis 55 Gew.-% des Lösungsmittelsystems nach Anspruch 6,
- 10 bis 25 Gew.-%, bezogen auf die Trockenmasse, mindestens eines Tensids und
- gegebenenfalls bis zu 30 % eines anderen Zusatzstoffs, vorzugsweise 10 bis 30 % eines anderen Lösungsmittels und/oder eines Kristallisationsinhibitors.

15. Formulierung nach einem der vorhergehenden Ansprüche, **dadurch gekennzeichnet, dass** sie ein Tensid c) umfasst, wobei das Tensid aus nichtionischen Tensiden, anionischen Tensiden, amphoteren Tensiden und deren Gemischen oder Kombinationen ausgewählt ist.

16. Formulierung nach einem der vorhergehenden Ansprüche, **dadurch gekennzeichnet, dass** sie in Form eines emulgierbaren Konzentrats, einer konzentrierten Emulsion oder einer Mikroemulsion, die weniger als 500 g/l Wasser enthält, vorliegt.

17. Verwendung der Formulierung nach einem der vorhergehenden Ansprüche zur Herstellung einer in Wasser verdünnten Zusammensetzung des Pflanzenschutzwirkstoffs durch Mischen mindestens eines Gewichtsteils der konzentrierten Formulierung mit mindestens 10 Teilen, vorzugsweise weniger als 1000 Teilen, Wasser.

18. Lösungsmittelzusammensetzung, umfassend ein Gemisch von Lösungsmitteln, **dadurch gekennzeichnet, dass** sie Folgendes umfasst:
- 20 bis 70 Gew.-%, vorzugsweise 30 bis 50 Gew.-% eines Alkylacetat-Lösungsmittels b1), dessen Alkylgruppe mindestens 3 Kohlenstoffatome enthält,
- 20 bis 70 Gew.-%, vorzugsweise 25 bis 45 Gew.-% eines Sulfoxid-Lösungsmittels b2) und
- 10 bis 60 Gew.-%, vorzugsweise 15 bis 35 Gew.-% eines Keton-Lösungsmittels b3).

19. Lösungsmittelzusammensetzung nach Anspruch 18, **dadurch gekennzeichnet, dass** sie Folgendes umfasst:
b1) 30 bis 50 Gew.-% Cyclohexyl- oder Ethylhexylacetat,
b2) 25 bis 45 Gew.-% DiMethylSulfOxid (DMSO) und
b3) 15 bis 35 Gew.-% Acetophenon.

20. Lösungsmittelzusammensetzung nach einem der Ansprüche 18 oder 19, **dadurch gekennzeichnet, dass**:
- sie im Wesentlichen kein Wasser enthält,
- sie im Wesentlichen keinen Pflanzenschutzwirkstoff enthält und
- sie gegebenenfalls andere Lösungsmittel und/oder Tensid enthält.

## Claims

1. Concentrated plant-protection formulation comprising:
a) an active plant-protection product,
b) a solvent system comprising the following three solvents:
b1) from 20% to 70% by weight of an alkyl acetate whose alkyl group is a C₆-C₁₂ alkyl,
b2) from 20% to 70% by weight of a sulfoxide, and
b3) from 10% to 60% by weight of acetophenone,
these amounts being expressed relative to the sum of the solvents b1), b2) and b3), equal to 100%,
c) optionally at least one emulsifier, preferably a surfactant, and
d) optionally water.

2. Formulation according to the preceding claim, **characterized in that** the alkyl of the solvent b1) is chosen from cyclohexyl, hexyl, ethylhexyl, octyl, isooctyl, decyl and isodecyl.

3. Formulation according to either of the preceding claims, **characterized in that** the sulfoxide b2) is dimethyl sulfoxide (DMSO).

4. Formulation according to one of the preceding claims, **characterized in that** the solvent system comprises the following solvents:
b1) cyclohexyl acetate,
b2) dimethyl sulfoxide (DMSO), and
b3) acetophenone.

5. Formulation according to one of the preceding claims, **characterized in that** the solvent system comprises:
- from 30% to 50% by weight of solvent b1),
- from 25% to 45% by weight of solvent b2), and
- from 15% to 35% by weight of solvent b3).

6. Formulation according to Claim 5, **characterized in that** the solvent system comprises:
- from 30% to 50% by weight of cyclohexyl acetate,
- from 25% to 45% by weight of dimethyl sulfoxide, and
- from 15% to 35% by weight of acetophenone.

7. Formulation according to one of the preceding claims, **characterized in that** the active plant-protection product is a herbicide, an insecticide, an acaricide, a rodenticide or a fungicide.

8. Formulation according to one of the preceding claims, **characterized in that** the active plant-protection product is chosen from the following compounds:
- Alachlor,
- Chlorpyriphos,
- alpha-Cypermethrin,
- Phenmedipham,
- Propanil,
- Pendimethalin,
- azoles, preferably triazoles, preferably tebuconazole,
- Triadimenol,
- Trifluralin,
- Oxyfluorfen,
- Imidacloprid,
- Dimethoate, and
- Propoxur.

9. Formulation according to one of the preceding claims, **characterized in that** it comprises at least 4%, preferably at least 5% and preferably at least 8%, by weight of solids, of at least one surfactant c).

10. Formulation according to one of the preceding claims, **characterized in that** it comprises:
a) from 4% to 60% and preferably from 10% to 50%, of the plant-protection product, by weight of active material,
b) from 10% to 92% and preferably from 20% to 80% by weight of solvent system,
c) from 4% to 60%, preferably from 5% to 50% and preferably from 8% to 25%, by weight of solids, of an emulsifier, preferably a surfactant, and
d) from 0 to 10% by weight of water.

11. Formulation according to one of the preceding claims, **characterized in that** it comprises:
- from 15% to 35% by weight of tebuconazole,
- from 40% to 65% by weight of the solvent system according to Claim 6,
- from 5% to 15% by weight of solids of at least one surfactant, and
- optionally up to 20% of another additive.

12. Formulation according to one of Claims 1 to 10, **characterized in that** it comprises:
- from 15% to 35% by weight of oxyfluorfen,
- from 50% to 75% by weight of the solvent system according to Claim 6,
- from 5% to 15% by weight of solids of at least one surfactant, and
- optionally up to 10% of another additive.

13. Formulation according to one of Claims 1 to 10, **characterized in that** it comprises:
- from 25% to 45% by weight of Propanil,
- from 25% to 45% by weight of the solvent system according to Claim 6,
- from 10% to 25% by weight of solids of at least one surfactant, and
- optionally up to 20% of another additive.

14. Formulation according to one of Claims 1 to 10, **characterized in that** it comprises:
- from 10% to 25% by weight of Phenmedipham,
- from 35% to 55% by weight of the solvent system according to Claim 6,
- from 10% to 25% by weight of solids of at least one surfactant, and
- optionally up to 30% of another additive, preferably from 10% to 30% of another solvent and/or of a crystallization inhibitor.

15. Formulation according to one of the preceding claims, **characterized in that** it comprises a surfactant c), the surfactant being chosen from nonionic surfactants, anionic surfactants and amphoteric surfactants, and mixtures or combinations thereof.

16. Formulation according to one of the preceding claims, **characterized in that** it is in the form of an emulsifiable concentrate, a concentrated emulsion or a microemulsion, comprising less than 500 g/L of water.

17. Use of the formulation according to one of the preceding claims, for preparing a composition diluted in water of the active plant-protection product, by mixing at least one part by weight of concentrated formulation with at least 10 parts and preferably less than 1000 parts of water.

18. Solvent composition comprising a mixture of solvents, **characterized in that** it comprises:
- from 20% to 70% and preferably from 30% to 50% by weight of an alkyl acetate solvent b1) whose alkyl group comprises at least 3 carbon atoms,
- from 20% to 70% and preferably from 25% to 45% by weight of a sulfoxide solvent b2), and
- from 10% to 60% and preferably from 15% to 35% by weight of a ketone solvent b3).

19. Solvent composition according to Claim 18, **characterized in that** it comprises:
b1) from 30% to 50% by weight of cyclohexyl or ethylhexyl acetate,
b2) from 25% to 45% by weight of dimethyl sulfoxide (DMSO), and
b3) from 15% to 35% by weight of acetophenone.

20. Solvent composition according to either of Claims 18 and 19, **characterized in that**:
- it comprises substantially no water,
- it comprises substantially no active plant-protection product, and
- it optionally comprises other solvents and/or surfactant.
